**Europäisches Patentamt**

**European Patent Office**

**Office européen des brevets**

(11) Veröffentlichungsnummer: **0 244 615**
A2

# (12) EUROPÄISCHE PATENTANMELDUNG

(21) Anmeldenummer: 87104365.9

(22) Anmeldetag: 24.03.87

(51) Int. Cl.⁴: **B 60 R 13/08**, G 10 K 11/16, E 04 B 1/84

(30) Priorität: 07.05.86 DE 3615418
12.09.86 DE 3631075

(43) Veröffentlichungstag der Anmeldung: 11.11.87
Patentblatt 87/46

(84) Benannte Vertragsstaaten: **AT BE CH DE ES FR GB GR IT LI LU NL SE**

(71) Anmelder: **CHEMIE-WERK WEINSHEIM GMBH, Weinsheimer Strasse 129, D-6520 Worms (DE)**

(72) Erfinder: **Plate, Rudolf, Karlmannstrasse 2, D-6520 Worms (DE)**
Erfinder: **Probst, Werner, Ludwigstrasse 7, D-6520 Worms (DE)**
Erfinder: **Polak, Josef, Dr., Zaybachstrasse 34, D-6500 Mainz 1 (DE)**

(74) Vertreter: **Leineweber, Jürgen, Dipl.-Phys., Am Heidstamm 78 a, D-5000 Köln 40 (DE)**

(54) Material für Antidröhnbeläge und Verfahren zur Herstellung von Antidröhnbelägen aus diesem Material.

(57) Die Erfindung bezieht sich auf ein Material für Antidröhnbeläge, welches Bitumen oder ein Bitumen-Kunststoff-Gemisch sowie poröse Füllstoffe enthält; um eine Gewichtsreduzierung zu erzielen, wird vorgeschlagen, als Füllstoff Hohlkörpergebilde enthaltende Tonstoffe zu verwenden, welche mit einer Beschichtung versehen sind. Die Beschichtung verhindert zum einen ein Eindringen von Bitumen in die Hohlkörpergebilde. Zum anderen kann die Beschichtung magnetisierbares Material enthalten, so daß eine magnetostatische Applikation möglich ist. Antidröhnbeläge mit relativ geringem spezifischem Gewicht und dennoch relativ hohem Verlustfaktor können unter Verwendung dieses Füllstoffes hergestellt werden.

ACTORUM AG

/

## Material für Antidröhnbeläge und Verfahren zur Herstellung von Antidröhnbelägen aus diesem Material

Die Erfindung bezieht sich auf ein Material für Antidröhnbeläge, welches Bitumen oder ein Gemisch aus Bitumen und Kunststoff sowie Füllstoffe enthält. Außerdem bezieht sich die Erfindung auf ein Verfahren zur Herstellung von Antidröhnbelägen aus diesem Material.

In vielen Bereichen der Technik, insbesondere im Automobilbau oder bei der Herstellung von Haushaltsgeräten, werden dünnwandige Bleche verwendet, die durch sich bewegende Teile, z.B. durch laufende Motoren, zu Schwingungen und damit zur Schallabstrahlung angeregt werden. Zur Reduzierung dieser Schallabstrahlung werden diese Blechflächen mit schalldämpfenden Belägen (Antidröhnbelägen) ausgerüstet, die vorzugsweise in Form von Schichten aufgeklebt oder auch aufgespritzt oder aufgespachtelt werden.

Die Antidröhnbeläge bestehen üblicherweise aus einem Bindemittel und Füllstoffen. Das Bindemittel ist

2

in der Regel Bitumen, vorzugsweise mit Kunststoff modifiziertes Bitumen. Als Füllstoffe sind Kalksteinmehl, Glimmer, Schiefermehl o.dgl. üblich.

Aufgabenstellung der letzten Jahre, besonders in der Kraftfahrzeugindustrie war es, leichtere Materialien zur Körperschalldämmung zu entwickeln. Um dieses Ziel zu erreichen, ist bereits vorgeschlagen worden (DE-OS 29 04 689), als Füllstoff poröses Material, wie Holzkohle, Koks, Asche o.dgl. einzusetzen. Eine wesentliche Gewichtsreduzierung kann dadurch jedoch nicht erzielt werden, da diese Füllstoffe das Bitumen in sich einsaugen, das spezifische Gewicht des Bitumens also maßgeblich bleibt.

Der vorliegenden Erfindung liegt die Aufgabe zugrunde, ein Material für Antidröhnbeläge zu schaffen, das wesentlich leichter als die vorbekannten Materialien ist. Außerdem soll ein Verfahren zur Herstellung von schichtförmigen Antidröhnbelägen aus diesem Material angegeben werden.

Der erste Teil der Aufgabe wird erfindungsgemäß dadurch gelöst, daß als Füllstoff mit einer Beschichtung versehene, überwiegend aus Hohlkörpergebilden bestehende Tonstoffe, vorzugsweise der Obsidianklasse, verwendet werden.

3

Füllstoffe dieser Art sind beispielsweise unter den
Handelsnamen "Norfil" und "Microloy" bekannt. Sie bestehen überwiegend aus Silizium- und Aluminiumoxiden
und liegen in Form von Micro-Hohlkugeln oder als multizellulares Hohlkörpergebilde vor. Die Form der multizellularen Hohlkörper ist unmittelbar nach ihrer Herstellung vielfältig (Kugel-, Stäbchen-, Flockenform u.
dgl.) bei einer Korngröße von ca. 10 bis 200 µm. Besonders geeignet für die Verwendung als Füllstoff in
Bitumen ist der kugelförmige Anteil des multizellularen Stoffes, da von allen vorkommenden Formen die Kugeln
in Bezug auf ihr Volumen die kleinste Oberfläche haben
und besonders einfach zu beschichten sind. Bei der Herstellung des erfindungsgemäßen Materials ist es deshalb
zweckmäßig, den nicht kugelförmigen Anteil weitestgehend
(bis auf einen Rest von weniger als 10 %) abzutrennen und
dann erst die Beschichtung vorzunehmen.

Da es möglich ist, die Hohlkörpergebilde vor dem Mischen
mit dem Bitumen mit geeigneten Materialien (mit Metall,
Kunststoff, Silan, Wasserglas o.dgl.) zu beschichten,
können diese Tonstoffe als Füllstoff in Bitumen verwendet

4

werden. Durch eine bis zu 400° C temperaturbeständige Schicht dieser Art wird verhindert, daß das Bitumen, das bei der üblichen Mischtemperatur von ca. 220° relativ dünnflüssig ist, in die Hohlkörper eintritt. Das ursprüngliche Raumgewicht der Hohlkörpergebilde bleibt erhalten und bewirkt damit eine erhebliche Gewichtsreduzierung des Bitumen-Füllstoff-Gemisches. Bei Schichten mit reduzierter Temperaturbeständigkeit kann die Mischtemperatur bis auf 140° gesenkt werden.

Besonders vorteilhaft ist es, wenn die Hohlkörpergebilde mit magnetisierbarem Material (Barium-, Strontiumferrit o.dgl.) beschichtet werden. Mit einem Füllstoff dieser Art hergestelle Folien können magnetisiert werden. Ihre Applikation auf den zu entdröhnenden Blechen wird dadurch erheblich erleichtert. Durch die Beschichtung der Hohlkörpergebilde mit magnetisierbarem Material erübrigt sich in der Regel der gesonderte Zusatz von Pulvern aus magnetisierbarem Material. Nur dann, wenn die gewünschte magnetische Haftkraft nach der Magnetisierung der Folie nicht ausreicht, ist magnetisierbares Pulver ergänzend hinzuzufügen.

Da die beschriebenen multizellularen Hohlkörpergebilde ein spezifisches Gewicht von etwa 0,2 g/cm$^3$ haben,

5

können extrem leichte Antidröhnmaterialien auf Bitumenbasis hergestellt werden. Selbst wenn diese aus Kostengründen neben dem aus den multizellularen Hohlkörpergebilden bestehenden Füllstoff noch weitere Füllstoffe,
wie Kalksteinmehl, Glimmer und/oder dgl., enthalten, sind
Antidröhnmaterialien mit einem spezifischen Gewicht von
unter 1 herstellbar.

Die erwähnten Micro-Hohlkugeln sind relativ hart und
druckfest. Sie können ohne Beschädigung mit dem Bitumen
in Mischern verarbeitet werden. Bei der Verwendung des
aus multizellularen Hohlkörpern bestehenden Füllstoffes
empfiehlt sich die Verwendung von Langsammischern mit
querliegenden Rührwerken, um eine Beschädigung zu vermeiden und dennoch eine gute Homogenisierung zu erzielen.
Das anschließende Kalandieren zur Herstellung von Antidröhnbelägen oder -folien ist ohne Beeinträchtigung des
äußerst leichten Füllstoffes möglich.

Überraschenderweise hat sich gezeigt, daß die Eigenschaften des erfindungsgemäßen Antidröhnmaterials in
Bezug auf die Körperschalldämpfung nicht schlechter

6

sind als die Körperschalldämpfungseigenschaften konventioneller Antidröhnbeläge mit den üblichen schweren
Füllstoffen. Bei gleicher Stärke und damit etwa gleichen
Dämpfungseigenschaften sind deshalb im Vergleich mit
bekannten Folien Gewichtseinsparungen von 60 % und
mehr (je nach den Gewichtsanteilen) möglich. Wird
hingegen aufgrund der Gewichtseinsparung eine z.B. um
20 % stärkere Folie verwendet, dann ist damit immer
noch im Vergleich mit konventionellen Folien eine
Gewichtsersparnis verbunden. Zusätzlich wird eine
Verbesserung der Dämpfungseigenschaften um ca. 30 %
erreicht. Da der Mineral-Füllstoff dimensionsstabil und
lange haltbar ist, tritt eine zeitliche Veränderung der
Dämpfungseigenschaften praktisch nicht ein.

Weitere Vorteile und Einzelheiten der Erfindung sollen
anhand von einigen Beispielen erläutert werden.

Beispiel I:

Die folgenden Bestandteile wurden in einem Langsammischer
bei 220° C gemischt und zu einer Folie (Antidröhnbelag)
mit einer Stärke von 2,8 mm kalandiert:

7

| 50 | Gewichtsanteile | modifiziertes Bitumen |
|---|---|---|
| 20 | " | Kalksteinmehl |
| 2 | " | Fasern |
| 15 | " | mit Silan beschichtete multizellulare, überwiegend kugelförmige Mineral-Hohlkörper |
| 8 | " | Glimmer |
| 5 | " | Harz |

Eigenschaften der Folie:

spez. Gewicht:          0,9

Verlustfaktor:          $20^{o}$ C, 200 Hz auf 1 mm Stahlblech bei einem Flächengewicht von 2,5 kg/m², d = 0,13

Der Verlustfaktor liegt damit in der Größenordnung dieser Werte bei konventionellen Folien. Das spezifische Gewicht ist um den Faktor 1,7 geringer. Soll die Beschichtung der multizellularen Hohlkörper aus magnetisierbarem Material bestehen, dann ist der Gewichtsanteil der beschichteten Hohlkörper auf 22 bis 25 % zu erhöhen und die Gewichtsanteile des Bitumens (um 5 bis 7 %) und des Kalksteinmehls (um 2 bis 3 %) zu reduzieren.
Die Temperatur im Mischer ist u.a. so zu wählen, daß die auf die Mineral-Hohlkörper aufgebrachte Schicht fest bleibt. Ist das Schichtmaterial ein Kunststoff mit einer reduzierten Temperaturbeständigkeit, dann kann die Verarbeitungstemperatur im Mischer bis auf $140^{o}$ C gesenkt werden.

8

Beispiel II:

Folgende Bestandteile wurden gemischt und kalandriert:

| 75 | Gewichtsanteile | modifiziertes Bitumen |
|----|-----------------|----------------------|
| 2  | "               | Fasern |
| 10 | "               | mit Silan beschichtete multizellulare, überwiegend kugelförmige Mineral-Hohlkörper |
| 10 | "               | Glimmer |
| 3  | "               | Harz |

Eigenschaften der Folie:

spez. Gewicht: 0,8

Verlustfaktor: 20°C, 200 Hz auf 1 mm Stahlblech bei einem Flächengewicht von 2,5 kg/m², d = 0,18

Beispiel III:

Als Ausgangspunkt für die Herstellung eines Antidröhnbelags mit Micro-Hohlkugeln als Füllstoff, welche mit magnetisierbarem Material beschichtet sind, ist die folgende Mischung zweckmäßig:

| 45 | Gewichtsanteile | modifiziertes Bitumen |
|----|-----------------|----------------------|
| 17 | "               | Kalksteinmehl |
| 2  | "               | Fasern |

9

| 25 | Gewichtsanteile | mit Bariumferrit beschichtete Micro-Hohlkugeln |
|----|----|----|
| 8 | " | Glimmer |
| 5 | " | Harz |

Wegen des höheren spezifischen Gewichts der Micro-Hohlkugeln (0,6) im Vergleich zu den Hohlkörpergebilden mit multizellularer Struktur (0,2) hat auch der aus dieser Mischung hergestellte Antidröhnbelag ein höheres spezifisches Gewicht. Sein Verlustfaktor liegt jedoch in der gleichen Größenordnung wie beim Beispiel I.

In einer in dieser Weise hergestellten Folie ist das magnetisierbare Material zu etwa 5 bis 10 % enthalten. Die dadurch nach einer Magnetisierung erzielte Haftkraft ist relativ gering. Sind höhere Haftkräfte erwünscht, ist magnetisierbares Material (z.B. Bariumferrit) ergänzend hinzuzufügen. Das spezifische Gewicht der Folie nimmt dann zwar zu; im Vergleich zum spezifischen Gewicht herkömmlicher Magnetfolien ist es jedoch erheblich geringer.

I

Material für Antidröhnbeläge und Verfahren
zur Herstellung von Antidröhnbelägen aus
diesem Material

A n s p r ü c h e

1) Material für Antidröhnbeläge, welches Bitumen oder ein Gemisch aus Bitumen und Kunststoff sowie poröse Füllstoffe
enthält, dadurch gekennzeichnet, daß als Füllstoff mit einer
Beschichtung versehene, überwiegend aus Hohlkörpergebilden
bestehende Tonstoffe verwendet werden.

2) Material nach Anspruch 1, dadurch gekennzeichnet, daß
die Hohlkörpergebilde überwiegend aus Silicium- und Aluminiumoxiden bestehen und mit einer bis zu 400$^o$ C temperaturbeständigen Schicht versehen sind.

3) Material nach Anspruch 1 oder 2, dadurch gekennzeichnet,
daß die Hohlkörpergebilde mit magnetisierbarem Material
beschichtet sind.

0244615

- 2 -

4) Material nach Anspruch 1, 2 oder 3, dadurch gekennzeichnet, daß die Hohlkörpergebilde in Form von Micro-Hohlkugeln vorliegen.

5) Material nach Anspruch 1, 2 oder 3, dadurch gekennzeichnet,
daß multizellulare Hohlkörpergebilde von überwiegend
sphärischer Form vorliegen.

6) Material nach einem der vorhergehenden Ansprüche, dadurch
gekennzeichnet, daß es neben dem aus den Hohlkörpergebilden
bestehenden Füllstoff noch weitere Füllstoffe wie Kalksteinmehl, Glimmer und/oder dgl. enthält.

7) Material nach Anspruch 6, dadurch gekennzeichnet, daß
es die folgenden Bestandteile enthält:

| | | |
|---|---|---|
| 35 - 55 | Gewichtanteile | Bitumen |
| 20 | " | Kalksteinmehl |
| 2 | " | Fasern |
| 15 - 35 | " | beschichtete Hohlkörper-gebilde |
| 8 - 13 | " | Glimmer |

0244615

- 3 -

8) Verwendung eines Materials nach einem der vorhergehenden Ansprüche zur Herstellung von Antidröhnbelägen.

9) Verfahren zur Herstellung von Antidröhnbelägen aus einem Material nach einem der Ansprüche 1 bis 7, dadurch gekennzeichnet, daß es unter Verwendung von Langsammischern mit querliegenden Rührwerken gemischt und bei erhöhter Temperatur auf Kalandern zu Schichten oder Folien verarbeitet wird, welche danach in der gewünschten Größe zugeschnitten werden.

10) Nach einem Verfahren nach Anspruch 9 hergestellter Antidröhnbelag, dadurch gekennzeichnet, daß er als Füllstoff mit einer Beschichtung versehene Hohlkörpergebilde nach einem der Ansprüche 1 bis 7 enthält.